(19) Europäisches Patentamt
European Patent Office
Office européen des brevets

(11)  EP 3 828 790 A1

(12)  **EUROPÄISCHE PATENTANMELDUNG**

(43) Veröffentlichungstag:
02.06.2021  Patentblatt 2021/22

(51) Int Cl.:
*G06Q 10/06* (2012.01)

(21) Anmeldenummer: 19212248.9

(22) Anmeldetag: 28.11.2019

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder: **Siemens Aktiengesellschaft**
**80333 München (DE)**

(72) Erfinder:
• **Haselböck, Alois**
  **3392 Schönbühel-Aggsbach (AT)**
• **Sperl, Simon**
  **4030 Linz (AT)**

(74) Vertreter: **Maier, Daniel Oliver**
**Siemens AG**
**Postfach 22 16 34**
**80506 München (DE)**

(54)  **VERFAHREN ZUR HERSTELLUNG EINES, AUS EINER PRODUKTMENGE AUFGRUND EINES AUSWAHLKRITERIUMS AUSGEWÄHLTEN PRODUKTS, SOWIE PRODUKTIONSSYSTEM HIERFÜR**

(57)  Verfahren zur Herstellung eines, aus einer Produktmenge ausgewählten Produkts, welche Produktmenge ein erstes und zumindest ein zweites Produkt umfasst, welches jeweils mittels einer Prozesskette (G1-G4) definiert ist, wobei eine Prozess-Datenstruktur in Form eines gerichteten, azyklischen Graphen die jeweilige Prozesskette (G1-G4) beschreibt, und die Prozessketten (G1-G4) in einem gemeinsamen Speicher gespeichert sind, die ausgewählte Prozesskette durch eine Steuervorrichtung von dem Speicher abgerufen wird, und ein Produktionsmittel mit Elementen (A-F, 1-9) der ausgewählten Prozesskette durch die Steuervorrichtung angesteuert wird und das ausgewählte Produkt hergestellt wird, wobei die Prozessketten (G1-G4) in eine einzige, gemeinsame Speicher-Datenstruktur (R) abbildet werden, wenn die Prozess-Datenstruktur für das erste und das zumindest eine zweite Produkt in zumindest einer jeweiligen Teilmenge übereinstimmt und die Speicher-Datenstruktur (R) im Speicher gespeichert wird.

FIG 2

**Beschreibung**

Die Erfindung betrifft ein Verfahren zur Herstellung eines, aus einer Produktmenge ausgewählten Produkts, welche Produktmenge ein erstes und zumindest ein zweites Produkt umfasst, welches jeweils mittels einer Prozesskette definiert ist, wobei eine Prozess-Datenstruktur in Form eines gerichteten, azyklischen Graphen die jeweilige Prozesskette beschreibt, und die Prozessketten in einem gemeinsamen Speicher gespeichert sind, die ausgewählte Prozesskette durch eine Steuervorrichtung von dem Speicher abgerufen wird, und ein Produktionsmittel mit Elementen der ausgewählten Prozesskette durch die Steuervorrichtung angesteuert wird und das ausgewählte Produkt hergestellt wird.

Die Erfindung betrifft ferner ein Produktionssystem mit einer Steuervorrichtung, einem Erfassungsmittel, einem Speicher und einem Produktionsmittel zur Herstellung eines, aus einer Produktmenge aufgrund eines Auswahlkriteriums ausgewählten Produkts, wobei das Erfassungsmittel dazu eingerichtet ist, ein Auswahlkriterium zu erfassen, und die Steuervorrichtung dazu eingerichtet ist, mittels dem Auswahlkriterium eine Prozesskette aus dem Speicher abzurufen, und das Produktionsmittel dazu eingerichtet ist, mithilfe der Prozesskette angesteuert zu werden, um das ausgewählte Produkt herzustellen.

Die Erfindung betrifft außerdem eine Verwendung einer Datenstruktur zur Speicherung von Prozessketten jeweils in Form eines gerichteten, azyklischen Graphen mit Knoten, welche Knoten jeweils über eine Kante verbunden sind, sowie eine Operation und eine Ressourcen-Zuordnung eines Produktionsmittels für jeden Knoten, und die jeweilige Kante einen Pfad für die Abfolge einzelner Schritte der Prozesskette, ausgehend von einem Start-Knoten bis zu einem End-Knoten, als Elemente der jeweiligen Prozesskette beschreibt.

In der zukünftigen Automatisierung ist ein Ausführungsgraph eine gültige Produktionssequenz für die Herstellung eines Produkts in einem bestimmten Werk. In der Regel gibt es viele solcher Diagramme für ein bestimmtes Produkt und eine bestimmte Anlage, da es häufig unerheblich ist, in welcher Reihenfolge einige Produktionsvorgänge ausgeführt werden, und häufig können verschiedene Maschinen einen Vorgang ausführen. Dies führt zu einem kombinatorischen Problem, das von einem Ausführungsgraphen-Generator gelöst werden muss, welches in der Regel auf der Lösung von Einschränkungen oder Techniken aus der Operationsforschung basiert.

Für einen Planer, der Produktionsaufträge Maschinen zuweisen muss, ist es wichtig, dass alle oder viele solcher Ausführungsdiagramme für jeden Produktionsauftrag verfügbar sind, um eine flexible Zuordnung von Vorgängen zu Maschinen zu ermöglichen.

Denn für Produkte und Anlagen von realer Größe und Komplexität ist die Anzahl der verschiedenen Ausführungsgraphen sehr groß, so dass der Ausführungsgraphen-Generator nur bis zu einem bestimmten Zeitlimit arbeiten und Ausführungsgraphen nur bis zu einem bestimmten Speicherlimit speichern kann. Es ist wichtig,

- so viele Ausführungsgraphen wie möglich innerhalb der vorgegebenen Zeit zu erzeugen und
- so viele Ausführungsgraphen wie möglich im vorgegebenen Speicher zu speichern.

Für die Erstellung von Ausführungsgraphen stehen hocheffiziente Solver zur Verfügung, die möglicherweise parallel in der Cloud ausgeführt werden. Das effiziente, komprimierte Speichern von Ausführungsgraphen auf einem begrenzten Speicherplatz ist jedoch ein offenes Problem. Zusätzlich zu den Anforderungen an eine speichereffiziente Speicherung müssen Zugriffsfunktionen effizient sein.

Normalerweise werden Ausführungsgraphen in einer Liste gespeichert. Wenn die durchschnittliche Speichergröße eines Ausführungsgraphen M ist, hat das Speichern von N Ausführungsgraphen im Durchschnitt die Größe M * N. Der Vorteil dieser Methode ist ihre Einfachheit. Eine solche Darstellung enthält jedoch viele Redundanzen, da viele Untergraphen normalerweise identisch sind und nicht mehrmals gespeichert werden müssen.

Um dies zu verbessern, können Lösungen eines logischen oder Einschränkungsproblems komprimiert werden, wobei BDDs (binären Entscheidungsdiagramme) oder MDDs (mehrwertigen Entscheidungsdiagramme) verwendet werden. Wenn es sich nicht um einfache, binäre oder listentypisierte Strukturen handelt, sondern um Diagramme, sind diese Methoden zwar anwendbar, bringen aber keinen oder nur einen sehr geringen Komprimierungseffekt.

Für die Familie von Datenstrukturen, die als Radix-Bäume oder Versuche bezeichnet werden, ist bislang noch keine ausreichende Lösung vorhanden. Radix-Bäume können jedoch nicht zum Speichern von Ausführungsgraphen ohne Anpassung verwendet werden, da sie zur Darstellung von Wörterbüchern und zur Optimierung der Textsuche verwendet werden.

Unter einem Radix-Baum versteht man eine platzoptimierte Datenstruktur, in welcher jeder Knoten, der das einzige Kind mit seinen Eltern ist, zusammengeführt wird. Die Anzahl der Kinder eines jeden internen Knoten ist daher höchstens die Radix des Radix-Baumes.

Eine andere Möglichkeit, den Speicherbedarf eines Ausführungsgraphen zu verringern, ist die binäre Kompression auf Dateiebene, wie durch "ZIP". Dies hat aber den erheblichen Nachteil, dass der Zugriff auf die Graphen, wie beispielsweise durch ein "Lookup" oder "Query", meist zu langsam ist.

Es ist Aufgabe der Erfindung ein Verfahren beziehungsweise eine Vorrichtung zur Herstellung eines Produkts bereitzustellen, wobei die Produktionsabläufe in Form von bekannten Prozessketten in einem Speicher gespeichert sind, und die dabei Datenstrukturen in Form von Radix-Bäumen eingesetzt werden können.

Die Aufgabe der Erfindung wird durch ein Verfahren eingangs genannter Art gelöst, indem die Prozessketten in eine einzige, gemeinsame Speicher-Datenstruktur abbildet werden, wenn die Prozess-Datenstruktur für das erste und das zumindest eine zweite Produkt in zumindest einer jeweiligen Teilmenge übereinstimmt und die Speicher-Datenstruktur im Speicher gespeichert wird.

Die Auswahl des Produkts aus der Produktmenge kann durch die Anwendung eines Auswahlkriteriums erfolgen.

Einem Produkt ist jeweils mittels einer Prozesskette mit zugeordneten Herstellungsschritten beziehungsweise Operationen, sowie Ressourcen zu deren Herstellung durch ein Produktionsmittel definiert.

Der jeweilige Graph umfasst Knoten, welche jeweils über eine Kante verbunden sind, sowie eine Operation und eine Ressourcen-Zuordnung des Produktionsmittels für jeden Knoten, und die jeweilige Kante einen Pfad für die Abfolge einzelner Schritte der Prozesskette, ausgehend von einem Start-Knoten bis zu einem End-Knoten, als Elemente der jeweiligen Prozesskette, aufweist.

Unter einer Teilmenge einer Prozesskette wird zumindest ein, mit einer weiteren Prozesskette gemeinsamer Knoten, oder zumindest zwei gemeinsame Knoten, welche über zumindest eine gemeinsame Kante verbunden sind, verstanden.

Die Teilmenge kann insbesondere ein Start- oder ein End-Knoten sein.

In der zukünftigen Automatisierung ist es eine wichtige Aufgabe, alle oder viele sogenannte Ausführungsgraphen für ein neues Produkt zu berechnen und zu speichern.

Ein Ausführungsgraph ist eine Folge von seriellen und/oder parallel verzweigten Produktionsschritten zur Herstellung eines Produkts durch einen Maschinenpark mit einer Menge an Maschinen.

Meist gibt es viele verschiedene Ausführungsgraphen zur Herstellung des Produkts. Zur Verbesserung der Flexibilität und/oder Auslastung des Maschinenparks kann es nötig sein, die nächsten Schritte angesichts einer Abfolge bereits ausgeführter Produktionsvorgänge zu ermitteln.

Dazu wird eine Datenstruktur in einem Speicher angelegt, wobei redundante Elemente vermieden und reduziert werden sollen.

Durch das erfindungsgemäße Verfahren wird erreicht, dass Prozessketten komprimiert gespeichert werden, aber trotzdem sehr schnell auf diese zugegriffen werden kann. Ein Kompressionsfaktor von 20 kann dabei erreicht werden.

Folgende Funktionen werden zum Erzeugen und Abfragen der gemeinsamen Speicher-Datenstruktur vorgesehen:

- $insert(R,G)$: fügt einen neuen Ausführungsgraphen in den Speicher $R$ (englisch "repository") ein,
- $nextops(R,H)$: liefert die Knoten des Ausführungsgraphen aus dem Speicher $R$, welche die möglichen nächsten Operationen repräsentieren, ausgehend von einer Menge an bereits ausgeführten Operationen $H$,
- $extract(R)$: lieferts die Menge aller Ausführungsgraphen, die im Speicher $R$ enthalten sind.

Im Weiteren wird davon ausgegangen, dass einzelne Ausführungsgraphen für mehrere gleiche oder verschiedene Produkte bereits erzeugt und als Prozesskette (englisch "Bill of Process", BoP) in einem Speicher verfügbar sind.

Eine Prozesskette beschreibt die Produktionsschritte beziehungsweise Operationen zur Herstellung eines Produkts unter Verwendung von Maschinen und Ressourcen.

Bei der Erzeugung eines Ausführungsgraphen wird eine entsprechende Maschine zugewiesen und Vorrangbeziehungen werden abgeleitet, wie "Operation A muss vor Operation B durchgeführt werden".

Ein Ausführungsgraph $G = (N_G,E_G)$ weist folgende Eigenschaften auf:

- $G$ hat beschriftete Knoten $N_G$ und Kanten $E_G$,
- Die Blatt-Knoten repräsentieren die Start-Operationen des Herstellungsverfahrens $start(G) \subset N_G$,
- Der Wurzel-Knoten repräsentiert die End-Operation des Herstellungsverfahrens $end(G) \in N_G$,
- Jeder Knoten von $G$ hat eine Beschriftung $label(t)$ mit $t \in N_G$, wobei die Beschriftung ein Paar $(op,m)$ aufweist, und die Operation $op$ auf der Maschine $m$ ausgeführt wird,
- Alle Kanten sind in Richtung der Baum-Wurzel orientiert. Eine Kante $(t1,t2)$ bedeutet, dass eine durch $t1$ repräsentierte Operation, zuerst abgeschlossen sein muss, bevor die durch $t2$ repräsentierte Operation begonnen werden kann.

Eine Speicher-Datenstruktur $R = (N_R,E_R,T_R)$ für den Ausführungsgraphen ist ein Graph, welcher durch das Zusammenführen von mehreren Prozessketten erzeugt ist und weist folgende Eigenschaften auf:

- $R$ ist ein azyklischer, gerichteter Graph mit beschrifteten Knoten $N_R$ und Kanten $E_R$,

- $T_R \subseteq N_R$ ist eine Menge von End-Knoten, wobei jeder mit einem End-Knoten *end*(*G*) des Ausführungsgraphen korrespondiert,
- Die Struktur ist durch die Konstruktion bestimmt, die mittels der Funktion *insert*(*R,G*) erzeugt wird.

Die Funktion *insert*(*R,G*) erlaubt die Erzeugung eines Speichers $R = (N_R, E_R, T_R)$ unter Verwendung folgender Hilfsfunktionen:

- *path*(*a,z*): liefert für zwei Knoten $a, z \in N_r$

  ○ Eine Menge verbundener Kanten von $E_R$: ((*a,b*),(*b,c*),...,(*x,y*),(*y,z*)), falls eine solche Menge existiert,
  ○ Eine leere Menge, falls keine Menge verbundener Kanten existiert,

- *start*(*R*): liefert die Menge aller Knoten von *R* mit keinen eingehenden Kanten,
- *sub*(*R,t*) mit $t \in T_R$: liefert einen Teilgraphen von *R*, welcher durch die folgende Menge der Kanten hervorgerufen wird:

$$\bigcup_{n \in start(R)} path(n, t)$$

*sub*(*R,t*) ist eindeutig definiert und repräsentiert einen Ausführungsgraphen mit dem End-Knoten *t*.

In einer Weiterbildung der Erfindung ist es vorgesehen, dass das Auswahlkriterium eine Auswahl einer optimalen Prozesskette zur Herstellung des ausgewählten Produkts ist, welche aufgrund einer Betriebskenngröße jener Ressource, mittels welcher das Herstellungsverfahren ausgeführt wird, oder einer gewünschten Produkteigenschaft des ausgewählten Produkts bestimmt ist.

In einer Weiterbildung der Erfindung ist es vorgesehen, dass die zumindest eine Teilmenge für die Prozess-Datenstruktur des ersten und die des zumindest einen zweiten Produkts durch die längste zusammenhängende Teilmenge bestimmt ist.

In einer Weiterbildung der Erfindung ist es vorgesehen, dass die zumindest eine Teilmenge für die Prozess-Datenstruktur des ersten und die des zumindest einen zweiten Produkts durch die längste nicht-zusammenhängende Teilmenge bestimmt ist.

In einer Weiterbildung der Erfindung ist es vorgesehen, dass die zumindest eine Teilmenge für die Prozess-Datenstruktur des ersten und die des zumindest einen zweiten Produkts durch die höchste Anzahl an Teilmengen über alle Prozessketten bestimmt ist, und die Anzahl an Prozessketten mehr als drei, bevorzugt mehr als fünf, besonders bevorzugt mehr als zehn beträgt.

Die erfindungsgemäße Aufgabe wird auch durch ein Produktionssystem eingangs genannter Art gelöst, indem das Produktionssystem dazu eingerichtet ist, das erfindungsgemäße Verfahren auszuführen.

Die erfindungsgemäße Aufgabe wird auch durch eine Verwendung eingangs genannter Art gelöst, indem Prozessketten für ein erstes und zumindest ein zweites Produkt in eine einzige, gemeinsame Speicher-Datenstruktur in einem Speicher abgebildet sind, wenn eine Prozess-Datenstruktur für das erste und das zumindest eine zweite Produkt in zumindest einer jeweiligen Teilmenge übereinstimmt.

Die Erfindung wird nachfolgend anhand von in den beigeschlossenen Zeichnungen dargestellten Ausführungsbeispiele näher erläutert. In den Zeichnungen zeigt:

Fig. 1      eine schematische Darstellung mit einem Ausführungsbeispiel einer erfindungsgemäßen Vorrichtung,

Fig. 2      eine schematische Darstellung mit einem Ausführungsbeispiel einer gemeinsamen Speicher-Datenstruktur,

Fig. 3      Pseudo-Programmcodes mit Ausführungsbeispielen für Dateneingaben in die gemeinsame Speicher-Datenstruktur nach Fig. 2,

Fig. 4      eine schematische Darstellung eines weiteren Beispiels einer Speicher-Datenstruktur,

Fig. 5-9      schematische Darstellung von Beispielen für Datenabrufe aus der Speicher-Datenstruktur nach Fig. 4,

Fig. 10-11      Ausführungsbeispiele mit Pseudo-Programmcodes.

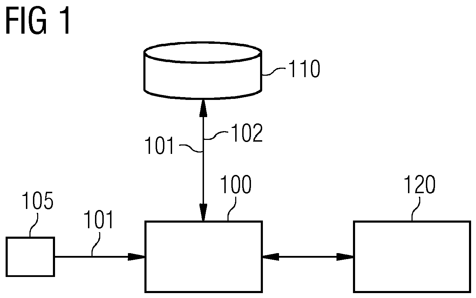

**Fig. 1** zeigt schematisch ein Ausführungsbeispiel eines erfindungsgemäßen Produktionssystems zur Ausführung des erfindungsgemäßen Verfahrens.

Es ist das Produktionssystem mit einer Steuervorrichtung 100, einem Erfassungsmittel 105, einem Speicher 110 und einem Produktionsmittel 120 zur Herstellung eines ausgewählten Produkts dargestellt.

Das ausgewählte Produkt wird aufgrund eines Auswahlkriteriums 101 aus einer Produktmenge ausgewählt, wobei das Erfassungsmittel 105 dazu eingerichtet ist, das Auswahlkriterium 101 zu erfassen,

Die Steuervorrichtung 100 ist dazu eingerichtet, mittels dem Auswahlkriterium 101 eine zugeordnete Prozesskette aus dem Speicher 110 abzurufen.

Das Produktionsmittel 120 ist dazu eingerichtet, mithilfe der Prozesskette angesteuert zu werden und das ausgewählte Produkt herzustellen.

Das Produktionssystem ist dazu eingerichtet, das erfindungsgemäße Verfahren auszuführen.

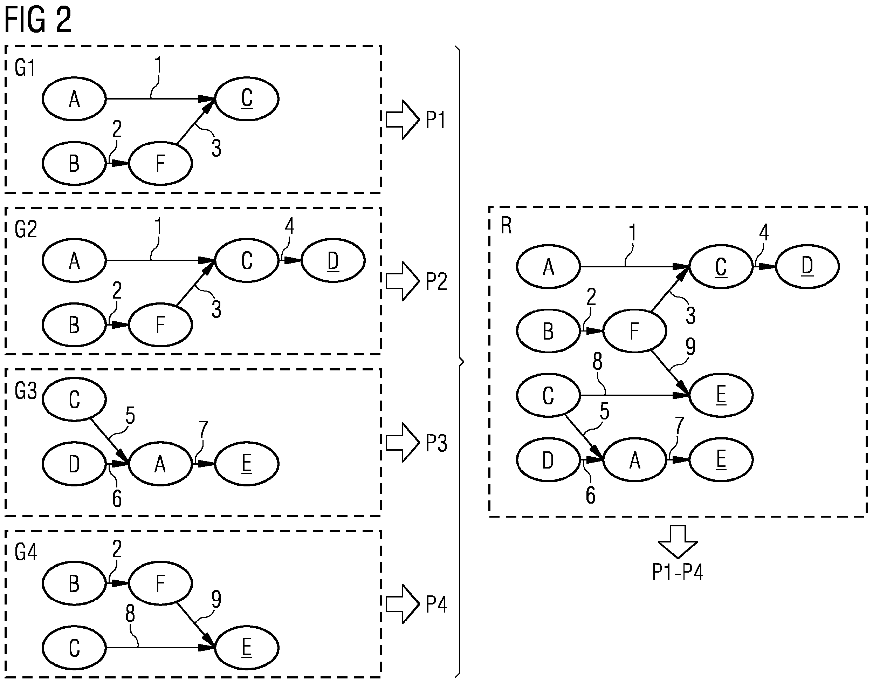

**Fig. 2** zeigt ein Ausführungsbeispiel für das erfindungsgemäße Verfahren in Form einer schematischen Darstellung einer gemeinsamen Speicher-Datenstruktur R.

Die Speicher-Datenstruktur R wird durch die Kombination mehrerer Prozessketten erzeugt.

Das Verfahren sieht die Herstellung eines, aus einer Produktmenge aufgrund eines Auswahlkriteriums 101 ausgewählten Produkts vor.

Die Produktmenge umfasst ein erstes P1 und zumindest ein zweites Produkt P2-P4.

Das erste und das zumindest ein zweites Produkt P1-P4 ist jeweils mittels einer Prozesskette G1-G4 mit zugeordneten Operationen und Ressourcen zu deren Herstellung durch ein Produktionsmittel 120 definiert.

Eine Prozess-Datenstruktur in Form eines gerichteten, azyklischen Graphen mit Knoten beschreibt die jeweilige Prozesskette G1-G4.

Die Knoten A-F sind jeweils über eine Kante verbunden, sowie eine Operation und eine Ressourcen-Zuordnung des Produktionsmittels 120 für jeden Knoten A-F.

Die jeweilige Kante 1-9 beschreibt einen Pfad für die Abfolge einzelner Schritte der Prozesskette G1-G4, ausgehend von einem Start-Knoten bis zu einem End-Knoten, als Elemente A-F, 1-9 der jeweiligen Prozesskette G1-G4.

Die Prozessketten G1-G4 sind in einem gemeinsamen Speicher 110 gespeichert.

Die ausgewählte Prozesskette wird durch Anwendung des Auswahlkriteriums 101 durch eine Steuervorrichtung 100 von dem Speicher 110 abgerufen.

Das Produktionsmittel 120 wird mit den Elementen A-F, 1-9 der ausgewählten Prozesskette durch die Steuervorrichtung 110 angesteuert und das ausgewählte Produkt wird hergestellt.

Die Prozessketten G1-G4 werden in eine einzige, gemeinsame Speicher-Datenstruktur R abbildet, wenn die Prozess-Datenstruktur für das erste und das zumindest eine zweite Produkt P1-P4 in zumindest einer jeweiligen Teilmenge übereinstimmt und die Speicher-Datenstruktur R wird in dem Speicher 110 gespeichert.

Das Auswahlkriterium 101 kann eine Auswahl einer optimalen Prozesskette zur Herstellung des ausgewählten Produkts sein, welche aufgrund einer Betriebskenngröße jener Ressource, mittels welcher das Herstellungsverfahren ausgeführt wird, oder einer gewünschten Produkteigenschaft des ausgewählten Produkts bestimmt ist.

Die zumindest eine Teilmenge für die Prozess-Datenstruktur des ersten und die des zumindest einen zweiten Produkts P1-P4 kann durch die längste zusammenhängende Teilmenge bestimmt sein.

Die zumindest eine Teilmenge für die Prozess-Datenstruktur des ersten und die des zumindest einen zweiten Produkts P1-P4 kann durch die längste nicht-zusammenhängende Teilmenge bestimmt sein.

Die zumindest eine Teilmenge für die Prozess-Datenstruktur des ersten und die des zumindest einen zweiten Produkts P1-P4 kann auch durch die höchste Anzahl an Teilmengen über alle Prozessketten G1-G4 bestimmt sein.

Die Anzahl an Prozessketten G1-G4 kann dabei mehr als drei, bevorzugt mehr als fünf, besonders bevorzugt mehr als zehn betragen.

Das erste Produkt P1 kann mittels einer ersten Prozesskette G1 beschrieben werden. Es sind Knoten A, B, C, F mit Kanten 1, 2, 3 mit den gezeigten Zusammenhängen mit Start-Knoten A, B und einem End-Knoten C̲ umfasst

End-Knoten sind in der Figur unterstrichen eingezeichnet.

Das zweite Produkt P2 kann mittels einer zweiten Prozesskette G2 beschrieben werden. Es sind Knoten A, B, C, D, F mit Kanten 1, 2, 3, 4 mit den gezeigten Zusammenhängen mit Start-Knoten A, B und einem End-Knoten D̲ umfasst.

Das dritte Produkt P3 kann mittels einer dritten Prozesskette G3 beschrieben werden. Es sind Knoten A, C, D, E mit Kanten 5, 6, 7 mit den gezeigten Zusammenhängen mit Start-Knoten C, D und einem End-Knoten E̲ umfasst.

Das vierte Produkt P4 kann mittels einer vierten Prozesskette G4 beschrieben werden. Es sind Knoten B, C, E, F mit Kanten 2, 8, 9 mit den gezeigten Zusammenhängen mit Start-Knoten B̲, C̲ und einem End-Knoten E̲ umfasst.

Es ist erkennbar, dass die erste Prozesskette G1 mit der zweiten Prozesskette G2 in den Knoten A, B, C, F und den Kanten 1, 2, 3 überlappt.

Es ist auch erkennbar, dass die zweite Prozesskette G2 mit der vierten Prozesskette G4 in den Knoten B, F und der Kante 2 überlappt.

Ferner ist es erkennbar, dass die dritte Prozesskette G3 mit der vierten Prozesskette G4 im Knoten C überlappt.

Die überlappenden Teilmengen der Prozessketten G1-G4 können nun eine gemeinsame Speicher-Datenstruktur R definieren, welche den benötigten Speicher zur Speicherung aller Prozessketten G1-G4 erheblich reduziert.

Die gemeinsame Speicher-Datenstruktur R weist weiterhin alle Prozessketten G1-G4 zur Erzeugung der Produkte P1-P4 auf.

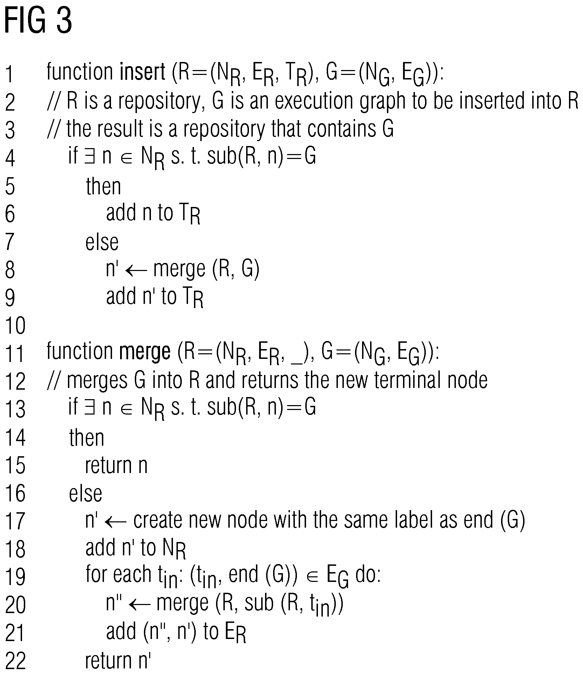

**Fig. 3** zeigt einen Pseudo-Programmcode mit Ausführungsbeispielen für Dateneingaben in die vorher beschriebene gemeinsame Speicher-Datenstruktur R.

Es ist eine Funktion "insert()" definiert, welche die Erzeugung der Speicher-Datenstruktur R erlaubt. Dabei werden Hilfs-Funktion "merge()" und "sub()" verwendet.

Die Funktion "insert()" fügt einen Ausführungsgraphen, das heißt eine Prozesskette der Speicher-Datenstruktur R hinzu.

Falls die Prozesskette bereits in der Speicher-Datenstruktur R enthalten ist, siehe Zeile 4 des Programmcodes in der

Figur, wird lediglich der End-Knoten der Prozesskette zu den End-Knoten der Speicher-Datenstruktur R hinzugefügt.

Ansonsten wird die Hilfs-Funktion "merge()" verwendet, um die Prozesskette hinzuzufügen, siehe Zeile 8.

Die Hilfs-Funktion "merge()" liefert einen neuen Knoten, welcher den End-Knoten in R repräsentiert und der in eine Liste von End-Knoten der Speicher-Datenstruktur R hinzugefügt wird, siehe Zeile 9.

Ähnlich zur Funktion "insert()" arbeitet die Hilfs-Funktion "merge()":
Wenn die Prozesskette bereits in der Speicher-Datenstruktur R enthalten ist, siehe Zeile 13, wird der Knoten der Speicher-Datenstruktur R entsprechend zum End-Knoten einer allgemeinen Prozesskette G geliefert. Die Prozesskette G kann eine, der im vorliegenden Beispiel verwendeten Prozessketten G1-G4 sein.

Ansonsten wird ein neuer Knoten n mit derselben Beschriftung wie der End-Knoten der Prozesskette G erzeugt, siehe Zeile 17, und zur Speicher-Datenstruktur R hinzugefügt, siehe Zeile 18.

Für den Start-Knoten $t_{in}$ jeder Kante, welche zum End-Knoten von G führt, siehe Zeile 19, wird die Hilfs-Funktion "merge()" rekursiv aufgerufen für den Teilgraph, beziehungsweise die Teil-Prozesskette, die bei $t_{in}$ endet, siehe Zeile 20.

Der resultierende Knoten ist n". Eine neue Kante von n" zu n' wird zur Speicher-Datenstruktur R hinzugefügt, siehe Zeile 21 und n' wird zurück geliefert, siehe Zeile 22.

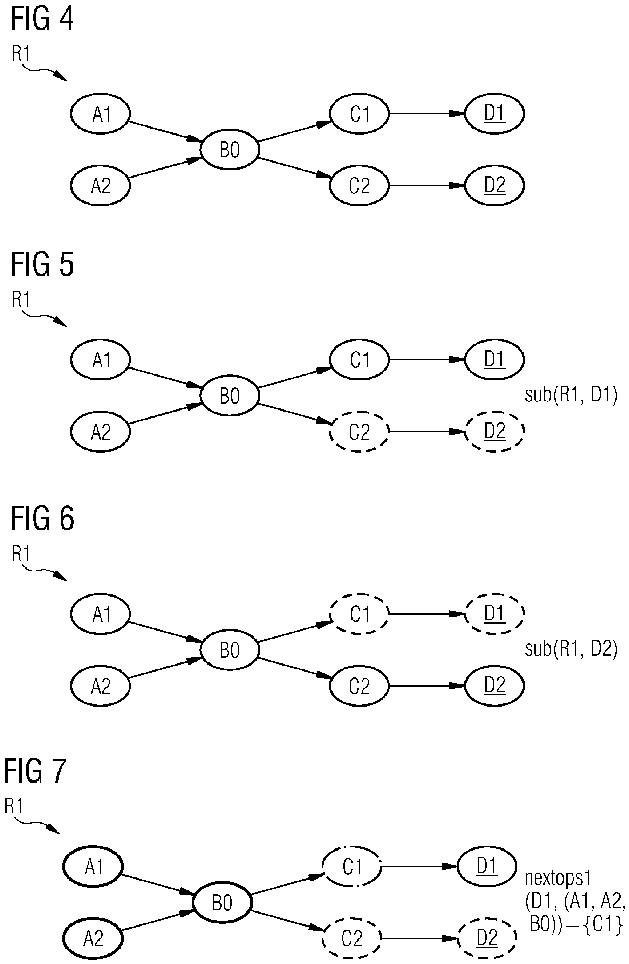

**Fig. 4** zeigt eine schematische Darstellung eines weiteren Beispiels für eine Speicher-Datenstruktur R1, welche zwei Prozessketten beinhaltet.

Eine erste Prozesskette weist Knoten in der Abfolge A1, B0, C1, D1 mit entsprechenden verbindenden Kanten auf, wobei A1 der Start-Knoten und D1 der End-Knoten ist.

Eine zweite Prozesskette weist Knoten in der Abfolge A2, B0, C2, D2 mit entsprechenden verbindenden Kanten auf, wobei A2 der Start-Knoten und D2 der End-Knoten ist.

Der Knoten B0 ist die gemeinsame Teilmenge der beiden Prozessketten.

**Fig. 5** zeigt eine Hilfs-Funktion "sub(R1, D1)", welche jene Prozesskette aus der Speicher-Datenstruktur R1 liefert, welche mit dem End-Knoten D1 terminiert.

Die unzutreffende Prozesskette ist strichliert eingezeichnet.

**Fig. 6** zeigt eine Hilfs-Funktion "sub(R1, D2)", jene Prozessketten aus der Speicher-Datenstruktur R1 liefert, welche mit dem End-Knoten D2 terminiert.

Die unzutreffende Prozesskette ist strichliert eingezeichnet.

**Fig. 7** zeigt eine Funktion "nextops1(D1, (A1, A2, B0))", welche jenen Knoten C1 liefert, welcher, ausgehend von einer Prozesskette mit A1 oder A2 über den gemeinsamen Knoten B0 zum End-Knoten D1 führt.

Das Resultat der Funktion ist strich-punktiert eingezeichnet.

Markierte Elemente sind dick umrahmt in den Figuren erkennbar, siehe nachfolgende Erläuterungen.

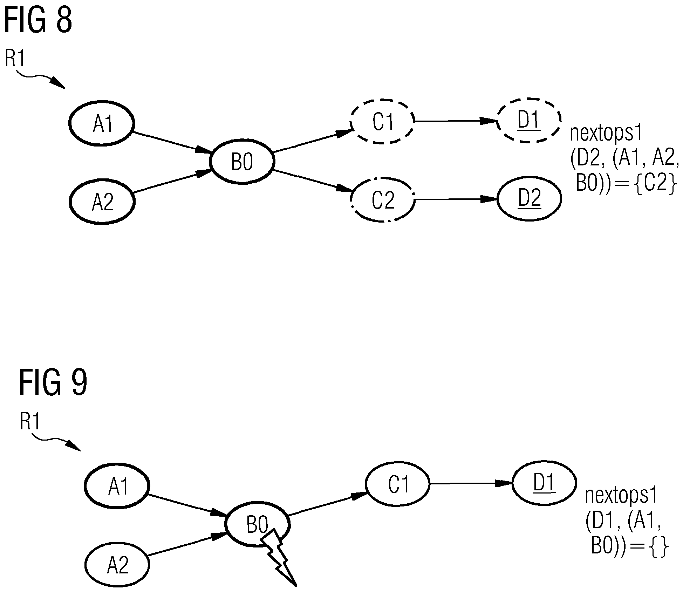

**Fig. 8** zeigt eine Funktion "nextops1(D2, (A1, A2, B0))" liefert jenen Knoten C2, welcher, ausgehend von einer Prozesskette mit A1 oder A2 über einen Knoten B0 zum End-Knoten D2 führt.

Das Resultat der Funktion ist strich-punktiert eingezeichnet.

Markierte Elemente sind dick umrahmt in den Figuren erkennbar, siehe nachfolgende Erläuterungen.

**Fig. 9** zeigt eine Funktion "netxops1(D1, (A1, B0))", welche zu keinem Resultat beziehungsweise zu einer leeren Menge führt, da die Abfrage eine nicht die vollständige Abfolge aufweist.

In diesem Fall gibt es keine nächste Operation, da (A1, B0) nicht mit dem Start-Teil-Prozess übereinstimmt.

Mit anderen Worten sind nicht alle eingehenden Knoten von B0 markiert. B kann nicht ausgeführt werden, ohne dass A1 und A2 abgeschlossen sind.

Markierte Elemente sind dick umrahmt in den Figuren erkennbar, siehe nachfolgende Erläuterungen.

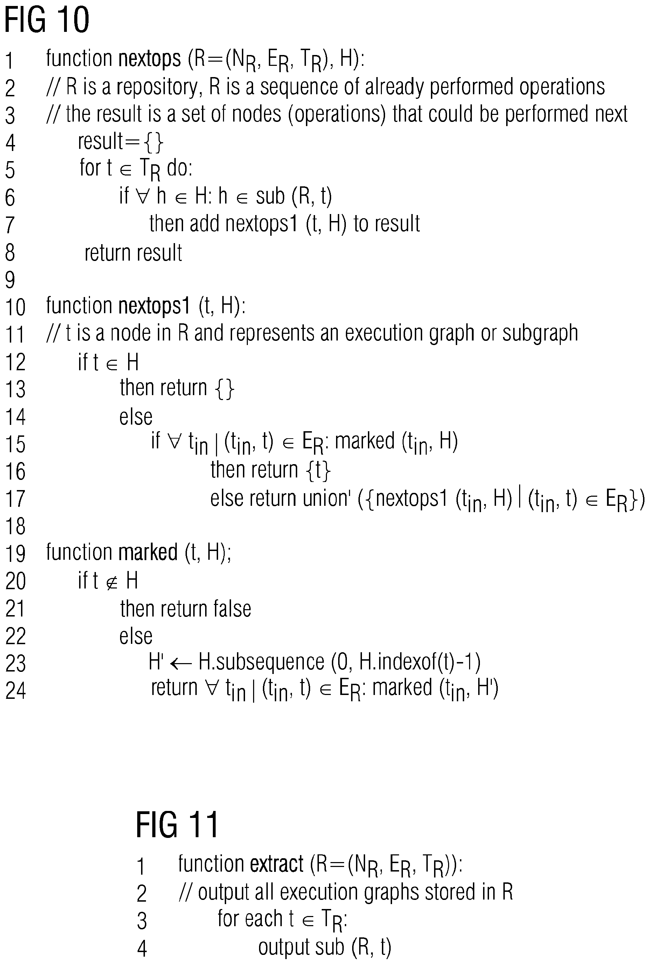

**Fig. 10** zeigt Ausführungsbeispiele für einen Pseudo-Programmcode von Funktionen mit Datenabrufe aus der vorher beschriebenen gemeinsamen Speicher-Datenstruktur R oder R1.

Es sind Funktionen "nextops()" und "nextops1()" definiert.

Die Funktion "nextops()" ist eine Hauptabfragefunktion von Daten aus der Speicher-Datenstruktur R oder R1.

Ausgehend von einer Sequenz H bereits durchgeführter Operationen, soll bestimmt werden, welche Herstellungs-Operationen als nächstes möglich sind.

Die Menge der Elemente der Operationen $H = (h_1...,h_n)$ entsprechen den Beschriftungen der Knoten der Speicher-Datenstruktur R. Es muss nicht unbedingt zwischen einem Knoten und dessen Beschriftungen unterschieden werden.

Die Abfolge H bildet eine Teil-Ordnung: $h_i$ wurde niemals vor $h_{n+1}$ ausgeführt, aber vor oder parallel zu $h_{n+1}$.

Die Ergebnisse der Operationen aller Ausführungsgraphen beziehungsweise Prozessketten werden in einer Funktion "nextops1()" separat gespeichert, siehe Zeilen 5-7.

Es ist sichergestellt, dass die Abfolge H nur Knoten enthält, welche Teil der aktuellen Ausführungsgraphen sind, siehe Zeile 6.

Die Funktion "nextops1(t, H)" berechnet die nächsten Operationen nur für eine Prozesskette, siehe Zeile 10.

Falls der End-Knoten bereits in der Abfolge H enthalten ist, gibt es keine weiteren Operationen, siehe Zeilen 12-13.

Ansonsten wird mithilfe einer Funktion "marked()" geprüft, ob alle eingehenden Knoten markiert sind, siehe Zeile 15.

Die Funktion "marked()" ist in Zeile 19 definiert.

Wenn alle Knoten markiert sind, wird die Vereinigung aller möglicher nächster Operationen aller eingehenden Knoten als Ergebnis zurück geliefert, siehe Zeile 17.

Es kann dabei eine spezielle Vereinigungsfunktion "union'()" verwendet werden, welche eine leere Liste zurück liefert, falls zumindest eine von deren Eingabelisten leer ist. Wenn eine der Eingabelisten leer war, bedeutet dies, dass eine der Teil-Prozessketten nicht bereits bekannt beziehungsweise gespeichert ist.

Die Funktion "marked()" liefert den Wert "wahr", wenn der Teil-Baum, der durch den jeweiligen Knoten repräsentiert ist, bereits bekannt beziehungsweise gespeichert ist.

Wenn der jeweilige Knoten t nicht in der Abfolge H enthalten ist, stimmt der Teil-Baum nicht überein, siehe Zeilen 20-21. Ansonsten werden diese bekannten beziehungsweise gespeicherten Knoten, beginnend von t, entfernt und die Funktion "marked()" rekursiv für die Teil-Prozessketten ausgeführt, siehe Zeilen 22-24.

Die Funktion "marked()" kann sehr effizient mittels dynamischem Programmierens implementiert werden.

**Fig. 11** zeigt ein Ausführungsbeispiel für einen Pseudo-Programmcode für eine weitere Funktion eines Datenabrufs aus der vorher beschriebenen gemeinsamen Speicher-Datenstruktur R oder R1.

Es ist eine Funktion "extract()" definiert, welche dazu verwendet werden kann, die Nummerierung aller Prozessketten die in der Speicher-Datenstruktur R enthalten sind, aufzuzählen oder auszugeben.

Die Funktion "extract()" verwendet die Hilfs-Funktion sub(R, t), siehe vorher.

**Bezugszeichenliste:**

| | |
|---|---|
| A-F, A1, A2, B0, C1, C2, D1, D2 | Knoten |
| G, G1-G4 | Prozesskette |
| P1-P4 | Produkt |
| R, R1 | Speicher-Datenstruktur |
| 1-9 | Kante |
| 100 | Steuervorrichtung |
| 101 | Auswahlkriterium |
| 102 | ausgewählte Prozesskette |
| 105 | Erfassungsvorrichtung für Auswahlkriterium |
| 110 | Speicher |
| 120 | Produktionsmittel |

**Patentansprüche**

1. Verfahren zur Herstellung eines, aus einer Produktmenge ausgewählten Produkts, welche Produktmenge ein erstes (P1) und zumindest ein zweites Produkt (P2-P4) umfasst, welches jeweils mittels einer Prozesskette (G1-G4) definiert ist,
wobei eine Prozess-Datenstruktur in Form eines gerichteten, azyklischen Graphen die jeweilige Prozesskette (G1-G4) beschreibt, und die Prozessketten (G1-G4) in einem gemeinsamen Speicher (110) gespeichert sind, die ausgewählte Prozesskette durch eine Steuervorrichtung (100) von dem Speicher (110) abgerufen wird, und ein Produktionsmittel (120) mit Elementen (A-F, 1-9) der ausgewählten Prozesskette durch die Steuervorrichtung (100) angesteuert wird und das ausgewählte Produkt hergestellt wird,
**dadurch gekennzeichnet, dass** die Prozessketten (G1-G4) in eine einzige, gemeinsame Speicher-Datenstruktur (R) abgebildet werden, wenn die Prozess-Datenstruktur für das erste und das zumindest eine zweite Produkt (P1-P4) in zumindest einer jeweiligen Teilmenge übereinstimmt und die Speicher-Datenstruktur (R) im Speicher (110) gespeichert wird.

2. Verfahren nach dem vorhergehenden Anspruch, wobei der jeweilige Graph Knoten (A-F) umfasst, welche jeweils über eine Kante verbunden sind, sowie eine Operation und eine Ressourcen-Zuordnung des Produktionsmittels (120) für jeden Knoten (A-F), und die jeweilige Kante (1-9) einen Pfad für die Abfolge einzelner Schritte der Prozesskette (G1-G4), ausgehend von einem Start-Knoten bis zu einem End-Knoten, als Elemente (A-F, 1-9) der jeweiligen Prozesskette (G1-G4), aufweist.

3. Verfahren nach Anspruch 2, wobei die Teilmenge der Prozessketten (G1-G4) zumindest einen Knoten (A-E, F), oder zumindest zwei Knoten (A-E, F), welche über eine jeweilige Kante (1-3, 5-9) miteinander verbunden sind, umfasst.

4. Verfahren nach einem der Ansprüche 2 oder 3, wobei die Teilmenge der Prozessketten (G1-G4) ein Start-Knoten (A-D, oder ein End-Knoten (D, E) ist.

5. Verfahren nach einem der vorhergehenden Ansprüche, wobei das Auswahlkriterium (101) eine Auswahl einer optimalen Prozesskette zur Herstellung des ausgewählten Produkts ist, welche aufgrund einer Betriebskenngröße jener Ressource, mittels welcher das Herstellungsverfahren ausgeführt wird, oder einer gewünschten Produkteigenschaft des ausgewählten Produkts bestimmt ist.

6. Verfahren nach einem der vorhergehenden Ansprüche, wobei die zumindest eine Teilmenge für die Prozess-Datenstruktur des ersten und die des zumindest einen zweiten Produkts (P1-P4) durch die längste zusammenhängende Teilmenge bestimmt ist.

7. Verfahren nach einem der vorhergehenden Ansprüche, wobei die zumindest eine Teilmenge für die Prozess-Datenstruktur des ersten und die des zumindest einen zweiten Produkts (P1-P4) durch die längste nicht-zusammenhängende Teilmenge bestimmt ist.

8. Verfahren nach einem der vorhergehenden Ansprüche, wobei die zumindest eine Teilmenge für die Prozess-Datenstruktur des ersten und die des zumindest einen zweiten Produkts (P1-P4) durch die höchste Anzahl an Teilmengen über alle Prozessketten (G1-G4) bestimmt ist, und die Anzahl an Prozessketten (G1-G4) mehr als drei, bevorzugt mehr als fünf, besonders bevorzugt mehr als zehn beträgt.

9. Produktionssystem mit einer Steuervorrichtung (100), einem Erfassungsmittel (105), einem Speicher (110) und einem Produktionsmittel (120) zur Herstellung eines, aus einer Produktmenge aufgrund eines Auswahlkriteriums (101) ausgewählten Produkts,
wobei das Erfassungsmittel (105) dazu eingerichtet ist, ein Auswahlkriterium (101) zu erfassen,
und die Steuervorrichtung (100) dazu eingerichtet ist, mittels dem Auswahlkriterium (101) eine Prozesskette aus dem Speicher (110) abzurufen,
und das Produktionsmittel (120) dazu eingerichtet ist, mithilfe der Prozesskette angesteuert zu werden, um das ausgewählte Produkt herzustellen,
**dadurch gekennzeichnet, dass** das Produktionssystem dazu eingerichtet ist, das Verfahren nach einem der vorhergehenden Ansprüche auszuführen.

10. Verwendung einer Datenstruktur zur Speicherung von Prozessketten (G1-G4) jeweils in Form eines gerichteten, azyklischen Graphen mit Knoten, welche Knoten (A-F) jeweils über eine Kante verbunden sind, sowie eine Operation und eine Ressourcen-Zuordnung eines Produktionsmittels (120) für jeden Knoten (A-F), und die jeweilige Kante (1-9) einen Pfad für die Abfolge einzelner Schritte der Prozesskette (G1-G4), ausgehend von einem Start-Knoten bis zu einem End-Knoten, als Elemente (A-F, 1-9) der jeweiligen Prozesskette (G1-G4) beschreibt,
**dadurch gekennzeichnet, dass** die Prozessketten (G1-G4) in eine einzige, gemeinsame Speicher-Datenstruktur (R) in einem Speicher (110) abgebildet sind, wenn die Prozess-Datenstruktur für das erste und das zumindest eine zweite Produkt (P1-P4) in zumindest einer jeweiligen Teilmenge übereinstimmt.

FIG 1

# FIG 2

EP 3 828 790 A1

# FIG 3

```
function insert (R=(N_R, E_R, T_R), G=(N_G, E_G)):
// R is a repository, G is an execution graph to be inserted into R
// the result is a repository that contains G
    if ∃ n ∈ N_R s. t. sub(R, n)=G
    then
        add n to T_R
    else
        n' ← merge (R, G)
        add n' to T_R

function merge (R=(N_R, E_R, _), G=(N_G, E_G)):
// merges G into R and returns the new terminal node
    if ∃ n ∈ N_R s. t. sub(R, n)=G
    then
        return n
    else
        n' ← create new node with the same label as end (G)
        add n' to N_R
        for each t_in: (t_in, end (G)) ∈ E_G do:
            n'' ← merge (R, sub (R, t_in))
            add (n'', n') to E_R
        return n'
```

# FIG 4

R1

A1

A2

B0

C1 → D1

C2 → D2

# FIG 5

R1

A1

A2

B0

C1 → D1

C2 → D2

sub(R1, D1)

# FIG 6

R1

A1

A2

B0

C1 → D1

C2 → D2

sub(R1, D2)

# FIG 7

R1

A1

A2

B0

C1 → D1

C2 → D2

nextops1
(D1, (A1, A2,
B0)) = {C1}

FIG 8

R1

A1

A2

B0

C1

C2

D1

D2

nextops1
(D2, (A1, A2,
B0))={C2}

FIG 9

R1

A1

A2

B0

C1

D1

nextops1
(D1, (A1,
B0))={}

# FIG 10

```
function nextops (R=(N_R, E_R, T_R), H):
    // R is a repository, R is a sequence of already performed operations
    // the result is a set of nodes (operations) that could be performed next
    result={}
    for t ∈ T_R do:
        if ∀ h ∈ H: h ∈ sub (R, t)
            then add nextops1 (t, H) to result
    return result

function nextops1 (t, H):
    // t is a node in R and represents an execution graph or subgraph
    if t ∈ H
        then return {}
        else
            if ∀ t_in | (t_in, t) ∈ E_R: marked (t_in, H)
                then return {t}
                else return union' ({nextops1 (t_in, H) | (t_in, t) ∈ E_R})

function marked (t, H);
    if t ∉ H
        then return false
        else
            H' ← H.subsequence (0, H.indexof(t)-1)
            return ∀ t_in | (t_in, t) ∈ E_R: marked (t_in, H')
```

# FIG 11

```
function extract (R=(N_R, E_R, T_R)):
    // output all execution graphs stored in R
    for each t ∈ T_R:
        output sub (R, t)
```

**Europäisches Patentamt**
**European Patent Office**
**Office européen des brevets**

## EUROPÄISCHER RECHERCHENBERICHT

**Nummer der Anmeldung**

EP 19 21 2248

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2019/206750 A1 (TRUMPF WERKZEUGMASCHINEN GMBH CO KG [DE]) 31. Oktober 2019 (2019-10-31) * Zusammenfassung; Abbildung 1 * ----- | 1-10 | INV. G06Q10/06 |
| X | US 2012/072250 A1 (HOFF ROLAND [DE] ET AL) 22. März 2012 (2012-03-22) * Zusammenfassung; Abbildung 1 * ----- | 1-10 | |

**RECHERCHIERTE SACHGEBIETE (IPC)**

G06Q

Der vorliegende Recherchenbericht wurde für alle Patentansprüche erstellt

| Recherchenort | Abschlußdatum der Recherche | Prüfer |
|---|---|---|
| München | 8. April 2020 | Weidmann, Matthias |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 21 2248

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-04-2020

| Im Recherchenbericht angeführtes Patentdokument | Datum der Veröffentlichung | Mitglied(er) der Patentfamilie | Datum der Veröffentlichung |
|---|---|---|---|
| WO 2019206750 A1 | 31-10-2019 | DE 102018110063 A1<br>WO 2019206750 A1 | 31-10-2019<br>31-10-2019 |
| US 2012072250 A1 | 22-03-2012 | KEINE | |

EPO FORM P0461

Für nähere Einzelheiten zu diesem Anhang : siehe Amtsblatt des Europäischen Patentamts, Nr.12/82